# EUROPÄISCHE PATENTSCHRIFT

(11) **EP 2 422 431 B1**
(45) Veröffentlichungstag und Bekanntmachung des Hinweises auf die Patenterteilung: **07.05.2014**
(21) Anmeldenummer: 10713990.9
(22) Anmeldetag: 19.04.2010
(51) Int. Cl.: H02K 11/00

(54) **ELEKTRISCHE MASCHINE MIT EINEM ROTOR UND EINEM STATOR UND EINER VORRICHTUNG ZUM ÜBERWACHEN DES LUFTSPALTS ZWISCHEN ROTOR UND STATOR**
ELECTRIC MACHINE COMPRISING A ROTOR, A STATOR AND A DEVICE FOR MONITORING THE AIR GAP BETWEEN ROTOR AND STATOR
MACHINE ÉLECTRIQUE COMPRENANT UN ROTOR ET UN STATOR ET UN DISPOSITIF DE SURVEILLANCE DE L'ENTREFER ENTRE LE ROTOR ET LE STATOR

(30) Priorität: 24.04.2009 DE 102009018553; 20.08.2009 DE 102009037990
(43) Veröffentlichungstag der Anmeldung: 29.02.2012
(73) Patentinhaber: ALSTOM Renewable Technologies, 38100 Grenoble (FR)
(72) Erfinder: SCHWERY, Alexander, CH-5024 Küttigen (CH); CIFYILDIZ, Serdar, CH-8400 Winterthur (CH); SCHMID, Matthias, CH-5413 Birmenstorf (CH)
(74) Vertreter: Pesce, Michele
(86) Internationale Anmeldenummer: PCT/EP2010/055132
(87) Internationale Veröffentlichungsnummer: WO 2010/121992

(56) Entgegenhaltungen:
- EP-A1- 1 870 987
- JP-A- 10 327 560
- JP-A- 59 191 451
- JP-A- 60 152 250

## Beschreibung

### TECHNISCHES GEBIET

Die vorliegende Erfindung bezieht sich auf das Gebiet der elektrischen Maschinen. Sie betrifft eine elektrische Maschine gemäss dem Oberbegriff des Anspruchs 1.

### STAND DER TECHNIK

Doppelt gespeiste Asynchronmaschinen im Leistungsbereich von 20 MVA bis 500 MVA können zur drehzahlvariablen Energieproduktion eingesetzt werden. Diese Maschinen zeichnen sich durch eine verteilte Dreiphasenwicklung auf dem Rotor aus. Die Rotorwicklung besteht aus einzelnen Stäben, welche im Rotorblechpaket in Nuten eingebettet sind. Im Wickelkopf werden die einzelnen Stäbe zu einer Wicklung verschaltet. Die Anordnung der Stabverbindungen ist gleichmässig am Umfang verteilt. Durch die Rotation des Rotors sind die Wickelköpfe Zentrifugalkräften ausgesetzt, gegen die sie mittels Wickelkopfrückhaltesystemen mechanisch gesichert werden müssen. Prinzipiell sind heute drei Arten von Wickelkopfrückhaltesystemen bekannt:
1. Befestigung mittels einer Stahlkappe, wie dies bei Turbogeneratoren der Fall ist.
2. Befestigung, indem der gesamte Wickelkopf mit einem Stahlkabel, Draht, oder Kunststofffolie umwickelt wird.
3. Befestigung mittels Bolzen, Schrauben oder U-förmigen Bügeln.

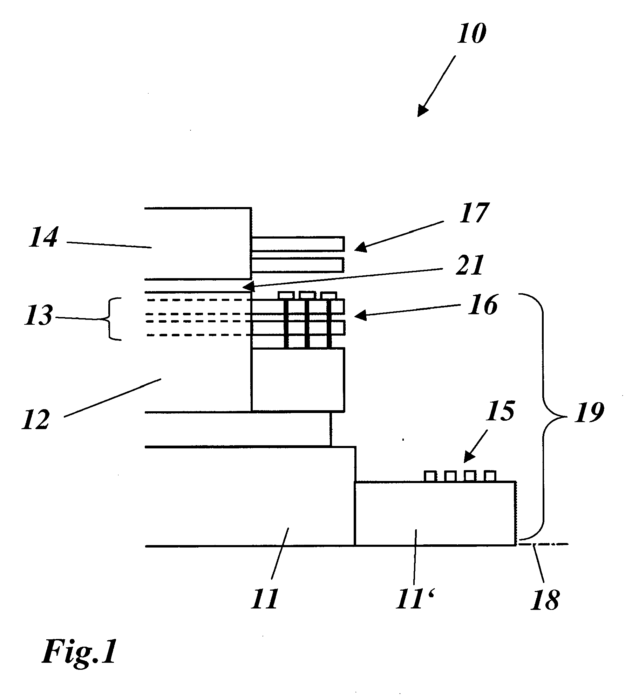

In Fig. 1 ist ausschnittweise in stark vereinfachter Form eine solche Asynchronmaschine 10 wiedergegeben. Sie umfasst einen um eine Achse 18 drehbaren Rotor 19, der konzentrisch von einem Stator mit einem Statorblechkörper 14 mit entsprechender Statorwicklung und einem Statorwickelkopf 17 umgeben ist. Der Rotor 19 umfasst einen Zentralkörper 11, der an den Enden jeweils in eine Welle 11' übergeht. Der Zentralkörper 11 ist umschlossen von einem Rotorblechkörper 12, in dem die Rotorwicklung 13 verläuft. Auf einer der Wellen 11' sind Schleifringe 15 angeordnet, die der Versorgung der Rotorwicklung 13 mit Strom dienen. Zwischen dem Rotorblechkörper 12 und dem Statorblechkörper 14 ist ein zylinderförmiger Luftspalt 21 vorgesehen, der sich in axialer Richtung durch die Maschine erstreckt.

Der Luftspalt kann in unterschiedlichen Betriebsphasen je nach Temperatur, Drehzahl und anderen sich ändernden Parametern eine unterschiedliche Geometrie aufweisen. Diese Änderungen beeinträchtigen die Funktion der Maschine nicht wesentlich. Es kann aber auch vorkommen, dass sich die Geometrie des Rotors auf nicht tolerierbare Weise dauerhaft verändert oder dass Fremdkörper in den Luftspalt gelangen. Um daraus folgende Funktionsstörungen zu vermeiden und die Maschine möglichst frühzeitig einer Inspektion zu unterziehen, besteht ein Bedürfnis, derartige Änderungen im Luftspalt rechtzeitig zu erkennen.

JP 59191451 offenbart eine elektrische Maschine mit einem Stator und einem Rotor, die einen Luftspalt definieren. Ein Lichtstrahl wird durch den Luftspalt gerichtet, um die Länge des Luftspalts zu ermitteln.

JP 10327560 offenbart eine elektrische Maschine mit einem Stator und einem Rotor, die einen Luftspalt definieren. Ein Laserstrahl wird durch den Luftspalt geführt, um Störsignale zu kompensieren und die Verschiebung der Wickelköpfe zu überwachen.

EP 1 870 987 offenbart eine rotierende Maschine mit einem Stator, einem Rotor und einem Spalt. Eine Messvorrichtung ist für den magnetischen Fluss vorgesehen, um den Spaltabstand zu überwachen.

JP 60152250 offenbart eine rotierende Maschine mit einem Stator und einem Rotor, die einen Luftspalt definieren.

Um den Luftspalt zu überwachen, werden optische Fasern mit Kondensorlinse und Kollimationslinse vorgesehen.

### DARSTELLUNG DER ERFINDUNG

Es ist daher Aufgabe der Erfindung, eine elektrische Maschine der eingangs genannten Art so weiterzuentwickeln, dass kritische Veränderungen in der Geometrie des Luftspaltes rechtzeitig erkannt werden.

Die Aufgabe wird durch die Gesamtheit der Merkmale des Anspruchs 1 gelöst. Charakteristisch für die erfiindungsgemässe Lösung ist es, dass in axialer Richtung durch den Luftspalt hindurchreichende Mittel zur Überwachung des Luftspaltes vorgesehen sind, mit welchen eine Veränderung der Rotorgeometrie und/oder das Eindringen von Fremdkörpern in den Luftspalt detektierbar sind.

Eine Ausführungsart der Erfindung ist dadurch gekennzeichnet, dass die Überwachungsmittel eine in axialer Richtung durch den Luftspalt hindurchreichende Überwachungsstrecke umfassen.

Vorzugsweise verläuft die Überwachungsstrecke achsenparallel,

Gemäss einer Weiterbildung dieser Ausführungsart wird die Überwachungsstrecke durch wenigstens einen gespannten Draht gebildet.

Insbesondere sind in diesem Falle Mittel zur Überwachung der mechanischen Spannung des Drahtes vorgesehen.

Der wenigstens eine Draht kann mittels Aufhängevorrichtungen am Rotor befestigt sein.

Der wenigstens eine Draht kann aber auch mittels Aufhängevorrichtungen am Stator befestigt sein.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer stark vereinfachten Darstellung einen Ausschnitt einer Asynchronmaschine mit Stator- und Rotorwicklung und einem Luftspalt zwischen Rotor und Stator nach dem Stand der Technik;
- Fig. 2: eine Asynchronmaschine gemäss Fig. 1 mit einer rotorseitig befestigten Überwachungsstrecke gemäss einem ersten Ausführungsbeispiel der Erfindung;
- Fig. 3: in einer zu Fig. 2 vergleichbaren Anordnung eine Synchronmaschine mit einer rotorseitig befestigten Überwachungsstrecke gemäss einem zweiten Ausführungsbeispiel der Erfindung;
- Fig. 4: eine Asynchronmaschine gemäss Fig. 1 mit einer statorseitig befestigten Überwachungsstrecke gemäss einem dritten Ausführungsbeispiel der Erfindung;
- Fig. 5: in einer zu Fig. 4 vergleichbaren Anordnung eine Synchronmaschine mit einer statorseitig befestigten Überwachungsstrecke gemäss einem vierten Ausführungsbeispiel der Erfindung; und

### WEGE ZUR AUSFÜHRUNG DER ERFINDUNG

Die grundlegende Idee der vorliegenden Erfindung besteht darin, mit Hilfe einer Überwachungsstrecke in Form eines gespannten Drahtes ein Eindringen von Fremdkörpern in den Luftspalt bzw. eine Veränderung der Rotorgeometrie frühzeitig zu erkennen. Das von der zugehörigen Überwachungseinrichtung generierte Signal kann zu Schutzzwecken oder nur zu Monitoringzwecken verwendet werden. Man kann dabei unterscheiden zwischen einem auf dem Rotor drehfest montierten System, welches der Überwachung des Stators dient und einem am Stator fixierten System, welches der Überwachung des Rotors dient. Ein solches System kann aber nicht nur in Asynchronmaschinen mit Vorteil eingesetzt werden, sondern auch in konventionellen Synchronmaschinen.

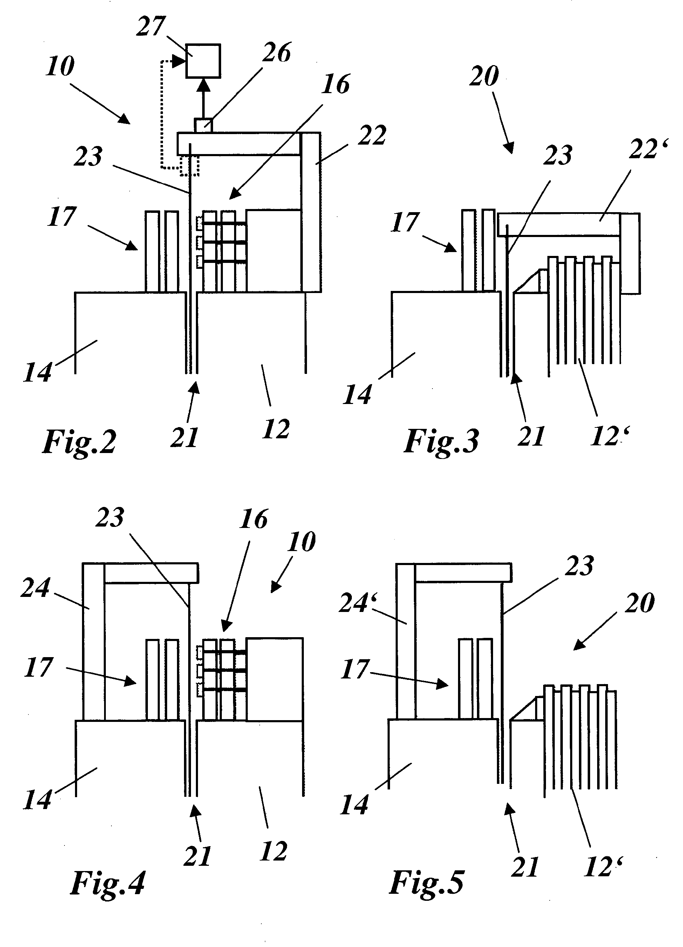

In den Fig. 2 und 3 ist ein erstes Ausführungsbeispiel für ein Überwachungssystem nach der Erfindung für eine Asynchronmaschine gemäss Fig. 1 (Fig. 2) und für eine Synchronmaschine (Fig. 3) wiedergegeben, wobei die Maschinenachse im Unterschied zu Fig. 1 hier in vertikaler Orientierung dargestellt ist. In beiden Fällen ist eine Überwachungsstrecke 23 achsenparallel durch den Luftspalt 21 zwischen Rotorblechkörper 12 und Statorblechkörper 14 geführt. Wie bereits erwähnt, kann die Überwachungsstrecke 23 durch einen unter mechanischer Spannung stehenden Draht gebildet werden

Das Ausführungsbeispiel aus Fig. 2 geht von einer drahtförmigen Überwachungsstrecke 23 aus. Ein aus geeignetem Material (Perlon, Kevlar, Aluminium etc.) bestehender Draht wird mit Hilfe von Aufhängevorrichtungen 22 so am Rotor 12 montiert, dass er im Luftspalt 21 parallel zur Maschinenachse 18 verläuft. Die Abstützungen können dabei am Rotor-Rim befestigt sein oder direkt an den Polendplatten angebracht werden. Die mechanische Spannung im Draht wird überwacht. Hierzu ist an der Aufhängevorrichtung 22 oder am Draht selbst (punktiert dargestellt) ein Spannungssensor 26 angeordnet, der die mechanische Spannung im Draht misst und entsprechende Signale an eine Auswerteeinheit 27 abgibt.

Fig. 3 zeigt eine analoge Anordnung für eine Synchronmaschine 20 mit einem Statorblechkörper 12' und einer Aufhängevorrichtung 22', Die Überwachungsmittel 26, 27 sind hier der Einfachheit halber weggelassen.

Lockern sich auf dem Stator Teile (zum Beispiel Distanzstege der Ventilalionsbleche) oder ändert sich die Geometrie des Stators massgeblich, wird der mit dem Rotor rotierende Draht berührt.

Zwei andere Ausführungsbeispiele, die den Fig. 2 und 3 entsprechen, sind in den Fig. 4 und 5 dargestellt. In diesem Falle wird der Draht (Überwachungsstrecke 23) am Stator fixiert. Die dafür notwendigen Aufhängevorrichtungen 24 bzw. 24' können dabei direkt an den Pressfingern, an den Luftverschalungen oder aber am (nicht gezeigten) Statorgehäuse angebracht werden. Das Funktionsprinzip entspricht dem der rotorfixierten Überwachung aus Fig. 2 bzw. 3. Lockern sich auf dem Rotor Teile, oder ändert sich die Geometrie des Rotors massgeblich, wird der Draht berührt.

Bei Synchronmaschinen 20 (Fig. 5) kann die beschriebene Überwachung eine Veränderung der Rotorgeometrie, wie eine Änderung der radialen Position eines Pols, eine ungleiche Ausdehnung des Rotor-Rims, aber auch Verformungen der Polverbindungen der Erreger und Dämpferwicklung feststellen.

Bei der doppelt gespeisten Asynchronmaschine (Fig. 4) kann nebst der Rundheit des Rotorblechkörpers insbesondere die Rückhaltevorrichtung des Wickelkopfes überwacht werden.

### BEZUGSZEICHENLISTE

- 10: elektrische Maschine (Asynchronmaschine)
- 11: Zentralkörper
- 11': Welle
- 12,12': Rotorblechkörper
- 13: Rotorwicklung
- 14: Statorblechkörper
- 15: Schleifring
- 16: Rotorwickelkopf
- 17: Statorwickelkopf
- 18: Achse
- 19: Rotor
- 20: elektrische Maschine (Synchronmaschine)
- 21: Luftspalt
- 22,22': Aufhängevorrichtung (rotorseitig)
- 23: Überwachungsstrecke (Draht)
- 24,24': Aufhängevorrichtung (statorseitig)
- 26: Spannungssensor
- 27: Auswerteeinheit

## Patentansprüche

1. Elektrische Maschine (10, 20) im Leistungsbereich von mehreren MVA, insbesondere Asynchronmaschine oder Synchronmaschine, welche elektrische Maschine (10, 20) einen um eine Achse (18) drehenden Rotor (19) mit einem Rotorblechkörper (12, 12') aufweist, der konzentrisch von einem Statorblechkörper (14) eines Stators umschlossen und von diesem durch einen ringförmigen Luftspalt (21) getrennt ist, wobei in axialer Richtung durch den Luftspalt hindurchreichende Mittel (23; 23a,b,c) zur Überwachung des Luftspaltes (21) vorgesehen sind, mit welchen eine Veränderung der Rotorgeometrie und/oder das Eindringen von Fremdkörpern in den Luftspalt (21) detektierbar sind,
wobei die Überwachungsmittel eine in axialer Richtung durch den Luftspalt (21) hindurchreichende Überwachungsstrecke (23) umfassen,
wobei die Überwachungsstrecke (23) achsenparallel verläuft,
**dadurch gekennzeichnet, dass** die Überwachungsstrecke (23) durch wenigstens einen gespannten Draht gebildet wird.

2. Elektrische Maschine nach Anspruch 1, **dadurch gekennzeichnet, dass** Mittel (26, 27) zur Überwachung der mechanischen Spannung des Drahtes vorgesehen sind.

3. Elektrische Maschine nach Anspruch 1 oder 2, **dadurch gekennzeichnet, dass** der wenigstens eine Draht mittels Aufhängevorrichtungen (22, 22') am Rotor (19) befestigt ist.

4. Elektrische Maschine nach Anspruch 1 oder 2, **dadurch gekennzeichnet, dass** der wenigstens eine Draht mittels Aufhängevorrichtungen (24, 24') am Stator befestigt ist.

## Claims

1. Electrical machine (10, 20) in the power range of several MVA, especially an asynchronous machine or synchronous machine, which electrical machine (10, 20) comprises a rotor (19) rotating about an axis (18) and having a rotor lamination stack (12, 12'), which is concentrically surrounded by a stator lamination stack (14) of a stator and separated from said stator by means of a ring-like air gap (21), wherein means (23; 23a,b,c) are provided for monitoring the air gap (21), said monitoring means reaching through said air gap in an axial direction, and being used for detecting a change of the rotor geometry and/or the presence of debris in the air gap (21), wherein the monitoring means comprise a monitoring track (23) which extends through the air gap (21) in the axial direction, wherein the monitoring track (23) runs parallel to the axis, **characterized in that** the monitoring track (23) is formed by at least one taut wire.

2. Electrical machine according to Claim 1, **characterized in that** means (26, 27) are provided for monitoring the mechanical strain in the wire.

3. Electrical machine according to Claim 1 or 2, **characterized in that** the at least one wire is fixed to the rotor (19) by means of suspension means (22, 22').

4. Electrical machine according to Claim 1 or 2, **characterized in that** the at least one wire is fixed to the stator by means of suspension means (24, 24').

## Revendications

1. Machine électrique (10, 20) dans la plage de puissance de plusieurs MVA, en particulier machine asynchrone ou machine synchrone, laquelle machine électrique (10, 20) présente un rotor (19) tournant autour d'un axe (18) avec un corps en tôle de rotor (12, 12'), lequel est entouré concentriquement par un corps en tôle de stator (14) d'un stator et est séparé de celui-ci par un entrefer de forme annulaire (21), des moyens (23 ; 23a,b,c) s'étendant dans la direction axiale à travers l'entrefer étant prévus pour contrôler l'entrefer (21), avec lesquels moyens une variation de la géométrie du rotor et/ou la pénétration de corps étrangers dans l'entrefer (21) peuvent être détectées,
les moyens de contrôle comprenant une section de contrôle (23) s'étendant dans la direction axiale à travers l'entrefer (21),
la section de contrôle (23) s'étendant avec son axe parallèle,
**caractérisée en ce que** la section de contrôle (23) est formée par au moins un fil métallique tendu.

2. Machine électrique selon la revendication 1, **caractérisée en ce que** des moyens (26, 27) sont prévus pour contrôler la tension mécanique du fil métallique.

3. Machine électrique selon la revendication 1 ou 2, **caractérisée en ce que** l'au moins un fil métallique est fixé au rotor (19) au moyen de dispositifs d'accrochage (22, 22').

4. Machine électrique selon la revendication 1 ou 2, **caractérisée en ce que** l'au moins un fil métallique est fixé au stator au moyen de dispositifs d'accrochage (24, 24').
